# EUROPÄISCHE PATENTSCHRIFT

(11) **EP 1 410 482 B1**
(45) Veröffentlichungstag und Bekanntmachung des Hinweises auf die Patenterteilung: **18.12.2013**
(21) Anmeldenummer: 02727500.7
(22) Anmeldetag: 28.03.2002
(51) Int. Cl.: H02J 7/14, B60L 11/12

(54) **ANTRIEB FÜR EIN KRAFTFAHRZEUG**
DRIVE FOR A MOTOR VEHICLE
DISPOSITIF D'ENTRAINEMENT POUR UN VEHICULE AUTOMOBILE

(30) Priorität: 31.03.2001 DE 10115834; 03.07.2001 DE 10131737; 18.02.2002 DE 10206570; 23.03.2002 DE 10213105
(43) Veröffentlichungstag der Anmeldung: 21.04.2004
(73) Patentinhaber: VALEO EQUIPEMENTS ELECTRIQUES MOTEUR, 94017 Créteil-Cedex (FR)
(72) Erfinder: Leiber, Heinz, 71739 Oberriexingen (DE)
(74) Vertreter: Lenzing Gerber Stute
(86) Internationale Anmeldenummer: PCT/EP2002/003526
(87) Internationale Veröffentlichungsnummer: WO 2002/080334

(56) Entgegenhaltungen:
- EP-A- 0 933 245
- EP-A- 1 034 968

## Beschreibung

Die Erfindung betrifft einen Antrieb für ein Kraftfahrzeug mit den Merkmalen des Oberbegriffs des Anspruchs 1.

Ein derartiger Antrieb mit diesen Komponenten ist aus der MTZ 3/2001 und zwar aus dem Editorial bekannt.

Aus der DE 197 49 548A1 ist ein Antrieb bekannt, bei dem zusätzlich zu einer üblichen Batterie ein Energiespeicher eingesetzt wird, der während des Schubbetriebs des Fahrzeugs von dem Generator aufgeladen wird. Diese geladene Energie wird in Fahrsituationen mit hohem Verbrauch ins Bordnetz eingespeist und zusätzlich wird der Generator entregt.

Mit der Einführung eines Kurbelwellenstartergenerators (KSG) oder, was gleichbedeutend ist, eines integrierten Startergenerators (ISG) steht für das 42V-Bordnetz ein starker Generator zur Verfügung, der auch als starker Elektromotor betrieben werden kann. Ein solcher Startergenerator kann auch durch Riemenantrieb angetrieben sein. Dieser wird mit RSG bezeichnet. Integriert bedeutet, ausgerüstet zur Verwendung als Generator und als Motor.

Verschiedene Untersuchungen aus letzter Zeit zeigen bei heute üblichen Fahrzyklen eine Verbrauchsersparnis durch Rückgewinnung der Bremsenergie, der sogenannten Rekuperation von 15 - 25%.

Bei der Durchführung der Rekuperation stellt der Energiespeicher ein Problem dar und zwar hinsichtlich der Zyklenbelastung und des Wirkungsgrads beim Laden und Entladen. Die VDI-Berichte zeigen im Heft 1547 des Jahres 2000 Seite 492 eine Übersicht über die möglichen elektrischen Speicher. Danach ist nur der Doppelschichtkondensator DLC in der Lage eine genügende Reichweite zu erzielen. Problem ist bei DLC seine relativ geringe Energiespeicherung. Im Gegensatz hierzu hat die 12V-Batterie hat diese einen höheren Innenwiderstand, was insbesondere bei tiefen Temperaturen zu hohen Spannungsabfällen führt, so dass nur eine erheblich reduzierte Startleistung zur Verfügung steht. Andererseits benötigt der KSG, bzw. ISG eine höhere Startleistung, um den Motor auf eine höhere Startdrehzahl zu bringen, was eine geringere Schadstoffemission zur Folge hat. Auch hierfür bietet der Doppelschichtkondensator bei richtiger Schaltung Vorteile und es ist bekannt, ihn deshalb als separaten Startspeicher einzusetzen. Darüber hinaus ist bei einem 42V-Bordnetz der Fremdstart zu beachten. Die Infrastruktur stellt bei der Einführung des 42V-Bordnetzes keine externe Spannungsversorgung zur Verfügung. Daher muss über einen 12/36V DC/DC-Konverter die 36V-Batterie geladen werden. Bei einer leeren, z. B. 25Ah 36V-Batterie muss zum Starten mindestens 30% Ladung = 7,6Ah vorhanden sein. Dies dauert bei einem teuren 1,4kW-Konverter elf Minuten, was dem Fahrzeugbetreiber nicht zugemutet werden kann.

Es ist bereits vorgeschlagen worden ein Fahrzeug mit zwei Bordnetzen und entsprechend zwei Batterien auszurüsten, von denen das eine 42V und das andere 14V Betriebsspannung und entsprechend 36V und 12V Batteriespannung aufweist (sh. z. b. VDI-Berichte Nr. 1547, 2000 S. 477ff).

Aus dem Buch" The New Automotive 42V- Power Net " von Alfons Graf erschienen im Expert Verlag, Seiten 59ff ist ein Antrieb bekannt, bei dem dem integrierten Startergenerator als Energiespeicher ein Ultra Cap zugeordnet ist. Startergenerator und Ultra Cap sind mit einem Hochspannungsbordnetz (30 bis 48V) verbunden. Es ist auch ein Niederspannungsbordnetz (12 bis 14V) vorgesehen. Dieses Niederspannungsbordnetz weist eine 12V-Batterie auf und es ist über einen Gleichspannungskonverter (DC/DC) mit dem Hochspannungsbordnetz verbunden.

Aus DE 19903427 ist ein Antrieb eines Kraftfahrzeuges mit einem Verbrennungsmotor vorbekannt, der einen integrierten Startgenerator (KSG), einen Energiespeicher (SES) in Form eines Kondensators, wenigstens eine Batterie (81) und ein Schaltelement sowie eine Steuerung aufweist. Durch Umschalten des Schaltelementes kann zwischen verschiedenen Betriebszuständen hin und her geschaltet werden, wobei in einem ersten Betriebszustand die Batterie über einen Hochsetzsteller geladen wird und in einem zweiten Betriebszustand der Startgenerator als Antriebsmotor fungiert, der von einem Energiespeicher gespeist wird. In einem dritten Betriebszustand versorgt der Startgenerator im Generatorbetrieb das 12 V Bordnetz, wobei gleichzeitig die Batterie aufgeladen wird.

Der Erfindung liegt die Aufgabe zugrunde, ausgehend von dem eingangs geschilderten Grundaufbau durch geschickten Einsatz der Elemente dieses Aufbaus die Speicherenergie besser zu nutzen, bzw. insgesamt Antriebsenergie einzusparen.

Diese Aufgabe wird durch die Merkmale des Patentanspruchs 1 gelöst.

Die Unteransprüche enthalten Weiterbildungen.

Der Ausdruck Fahrbetrieb kann hierbei ein Fahren mit einer gleichbleibenden oder ansteigenden Geschwindigkeit bedeuten. Bei einer anschließenden Bremsung, bzw. Fahrzeugverzögerung auf z. B. Stillstand soll der Speicher über das Powermanagement möglichst voll geladen werden.

Anhand der Zeichnung werden Ausführungsbeispiele der Erfindung erläutert. Es zeigen:
- Fig. 1: den Aufbau des Antriebs mit einer Batterie;
- Fig. 2: ein Zeitdiagramm zur Erläuterung der Funktion;
- Fig. 3: die Lade-/Entladekurve des Ultra Cap;
- Fig. 4: die räumliche Anordnung des Energiespeichers;
- Fig. 5: eine Gegenüberstellung verschiedener bekannter und vorgeschlagener Konzepte mit der erfindungsgemäßen Ausbildung;
- Fig. 6 bis 8: Aufbauten des Antriebs mit zwei Batterien, bzw. einer Batterie im 42V-Bordnetz;
- Fig. 9: einen Aufbau mit einer Doppelbatterie;
- Fig.10: einen Aufbau, bei dem sich nur der Energiespeicher im Hochspannungsbordnetz befindet und alle Verbraucher im Niederspannungsbordnetz untergebracht sind.

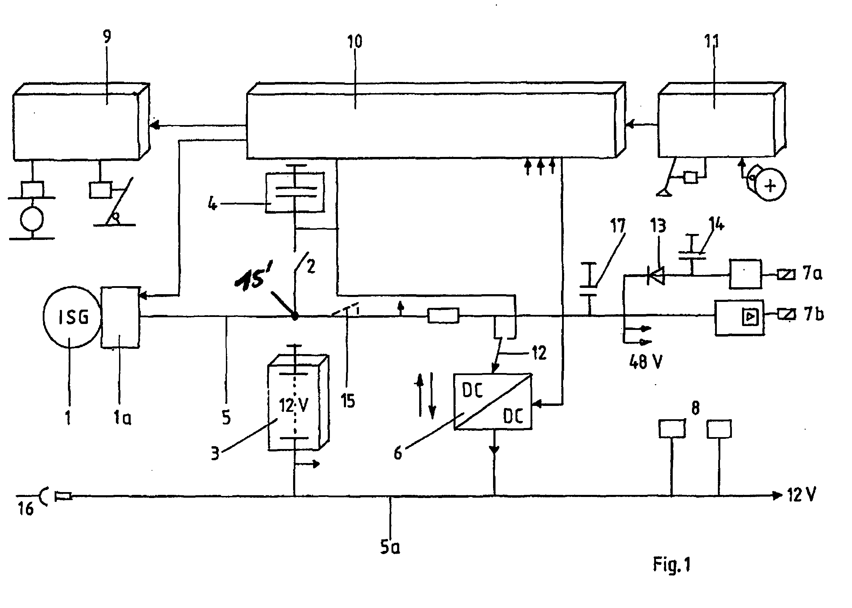

Fig. 1 zeigt ein Ausführungsbeispiel mit einem integrierten Startergenerator (ISG) 1, einer 12V-Batterie 3, sowie einen Doppelschichtkondensator 4, z. B. einen Ultra Cap. Der ISG 1versorgt über die Verbindung 5 das 42V-Bordnetz und über einen 42/12V-Konverter 6 das 12V-Netz 5a. An den Netzen sind Verbraucher 7a und 7b und 8 angeschlossen. Mit 9 ist die Motorsteuerung bezeichnet. Der Ultra Cap 4 hat:
einen guten Wirkungsgrad (>95%),
eine hohe Strombelastung und
einen geringen Innenwiderstand.

Er kann über einen Schalter 2 mit dem ISG 1 und dem 42V-Bordnetz verbunden werden. Eine wichtige Funktion in diesem Konzept kommt der als Powermanagement 10 bezeichneten Steuerung zu, die folgende Aufgaben hat:
- Steuerung des Bremsmanagements 11 in der Weise, dass der Fahrerwunsch zur Abbremsung umgesetzt wird und zwar teilweise durch die mechanische Reibkraftbremse und teilweise durch die elektrische Bremse mittels des Startergenerators 1, wobei der elektrische Speicher 4 vom Generator aufgeladen wird.
- Steuerung des Motormanagements 9, während der Entladung des Speichers in den elektrischen Antrieb (ISG1) dergestalt, dass der Fahrerwunsch in elektrischen Antrieb und Antrieb über den Verbrennungsmotor aufgeteilt wird.
- die Batterie 3 hinsichtlich der Zustände SOH (Batteriezustands) und SOC (Ladezustands) zu überwachen und den Generator entsprechend der notwendigen Stromversorgung zu steuern.
- Auswertung der verschiedenen Messstellen und Einschaltung des Spannungskonverters 6.
- den Ultra Cap und das Bordnetz über die Schalter 2 und den Schalter 1a zu schalten.
- die DC-Konverter bedarfsabhängig zu steuern.
- bei abgestelltem Fahrzeug durch ein Ruhestrommanagement den Entladestrom des Ultra Cap 4 durch kurzzeitiges Zuschalten der Batterie auszugleichen und gegebennenfalls andere Steuergeräte abzuschalten.
- die verschiedenen Schaltungen von Ultra Cap und Bordnetz vorzunehmen und die Ladung und Entladung des Ultra Cap einzuleiten

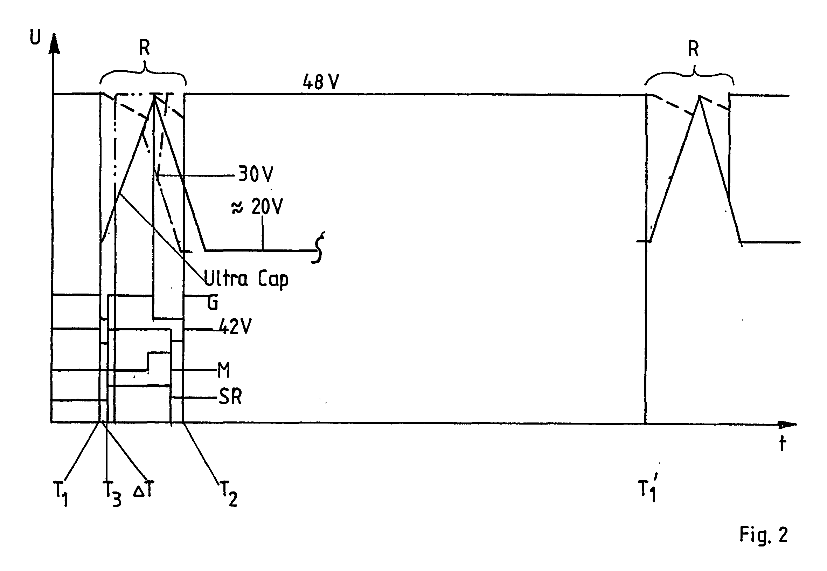

Tritt ein Bremsvorgang ein, so wird der ISG 1 durch den Pulswechselrichter im Block 1a kurzzeitig auf nahezu 0 Ausgangsstrom geschaltet und anschließend wird der Schalter 2 geschlossen. Daraufhin wird der ISG 1 auf volle Generatorleistung zur Ladung des Ultra Cap 4 geschaltet. Nach Abschluss des Bremsvorganges oder bei vollem Speicher wird der ISG 1 abgeschaltet. Im anschließenden Fahrbetrieb wird der ISG 1 als Elektromotor betrieben, wobei die Ladung des Ultra Cap 4 zu dessen Antrieb und für das Bordnetz benutzt wird. Ist die Ladung umgesetzt, z. B. Entladung bis auf 30 Volt, so wird der Strom zum Motor durch den Schaltblock 1a abgeschaltet. Anschließend wird der Schalter 2 geöffnet und der Generator versorgt dann gesteuert vom Powermanagement 10 das Bordnetz. Hier zeigt sich der Vorteil der getrennten An- und Abschaltung des Ultra Cap 4, wobei nahezu der volle Spannungsbereich umgesetzt wird. Die kurzzeitige Abschaltung ist notwendig, damit die Hochstromschalter durch den Schaltvorgang nur wenig belastet werden. Man könnte für diese Schalter auch Relais verwenden, da deren Übergangswiderstand erheblich kleiner als der von Mosfets ist. Dieser Vorgang wird anhand der Fig. 2 noch näher beschrieben.

Bei der Ausbildung der Fig. 1 ist der Gleichstromkonverter 6 bidirektional ausgebildet und wird alternativ zum Laden der Batterie 3, bzw. zur Aufladung des Ultra Cap 4 benutzt. Hierfür ist ein Schalter 12 vorgesehen.

Der Konverter 6 ist im Normalfall über den Schalter 12 an die Generatorleitung 5 angeschlossen. Zur Nutzung der Rekuperationsenergie bis zu niedrigen Spannungen, bzw. zur Aufladung des Energiespeichers 4zum Starten wird er umgeschaltet.

Der DC-Konverter kann für die Umschaltung des Speichers 4 auch kurzzeitig ausgeschaltet werden.

Von der Generatorleitung 5 werden neben dem Konverter 6 auch die 42- 48V Verbraucher versorgt. Hier sind zwei unterschiedliche Verbraucherklassen zu unterscheiden:
a. solche 7a, die in einem höheren Spannungsbereich arbeiten, z. B, die elektromagnetische Ventilsteuerung (30 - 48V). Für diese wird für die Phase der Rekuperation mit kleinerer Versorgungsspannung (< 30V) die Energie für eine höhere Spannungsversorgung in einem Kondensator 15 gepuffert und über eine Diode 13 getrennt. Alternativ könnten diese über den umgeschalteten DC-Konverter mit 42V aus dem 12V-Batteriespeicher versorgt werden
b. solche 7b, die auch im Bereich < 30, z. B. 15-20V noch betrieben werden können, wie z. B. Heizung und Lüftermotoren. Diese können auch kurzzeitig während der Rekuperation abgeschaltet werden oder mit kleinerer Leistung betrieben werden.

Bei Bedarf kann an die zu den Lasten 7a und 7b führende Leitung ein Pufferkondensator 17 eingebaut werden, um Spitzenlasten in der Rekuperationsphase auszugleichen und die Welligkeit der Versorgungsspannung zu glätten.

Man kann dem Energiespeicher 4 einen weiteren Energiespeicher parallel schalten und diesen nur zur Fahrzeugbeschleunigung einsetzen. Auch kann man die Entladungssteuerung so auslegen, dass der Energiespeicher eine Restladung für eine folgende Beschleunigungsphase behält.

Fig. 2 zeigt den zeitlichen Verlauf der Spannung während der Rekuperation. Zum Zeitpunkt T₁ kommt vom Powermanagement das Rekuperationssignal. Danach wird kurzzeitig (10 - 20ms) der Generator 1 von den 42V Lasten abgeschaltet und der Schalter 2 zum Ultra Cap geschlossen. Hierbei fällt die Versorgungsspannung 4 des 42-49V Netzes auf die untere Spannung (z. B. 20V) des Ultra Cap. Nach der danach erfolgenden Einschaltung des Startergenerators 1 erfolgt eine Aufladung des Ultra Cap 4 bis 48V, wenn genügend Bremsenergie geliefert wird. Ist diese Spannung erreicht oder wird vorher die Energieeinspeisung beendet, so wird der Startergenerator abgeschaltet und die gespeicherte Energie wird bis zum Erreichen einer unteren Spannungsgrenze von z. B. 30V dem 42 - 48V Netz zugeführt. Nunmehr wird der Startergenerator 1 bei T₂ wieder eingeschaltet und das 42V Hochspannungsnetz wird z. B. mit der oberen erlaubten Spannung mit 48V betrieben. In der Phase der Energieabgabe durch den Ultra Cap 4 wird der integrierte Startergenerator 1 als Elektromotor wirksam gemacht. Eine Zeitspanne ΔT bevor bei T₂ die Einschaltung des Generators 1 erfolgt, werden kurzzeitig die 42V Verbraucher 7a und 7b abgeschaltet, damit der Schalter 2 beim Umschalten nicht belastet ist. Hierzu kann in der Generatorleitung 5 gegebenenfalls zusätzlich ein Schalter 15 eingebaut sein, damit der Zustand "nahezu kein Stromfluss" während der Umschaltung sichergestellt ist. Dieser Schalter hat auch den Vorteil, dass die 42V-Verbraucher 7a und 7b in der Rekuperationsphase von dem Konverter 6 mit 42V versorgt werden. Wegen der begrenzten Leistung können nicht alle Verbraucher eingeschaltet werden. Die Speicherkondensatoren 14 und 17 können damit sehr klein bemessen werden. Bei 48V Spannung ist ein erheblich besserer Wirkungsgrad von synchronmaschinen und allen indirekten Lasten inklusive Motoren gegeben, wenn Sie mit gleicher Leistung betrieben werden, da bei entsprechend kleinerem Strom und gleichem Widerstand die Verlustleistung der Gleichung Pᵥ = i² ° R folgt. Außerdem kann auch eine höhere Leistung mit höherer Spannung genutzt werden, was Vorteile für die Scheibenheizung beim Starten bringt. Wenn z. B. bei tiefen Temperaturen der Ultra Cap 4 über den DC-Konverter auf 48V geladen ist, so ist die Starterspannung aufgrund des kleineren Innenwiderstands im Vergleich zur Batterie nahe zu doppelt so hoch. Mit 8 sind weitere Verbraucher bezeichnet, die dem Niederspannungsbordnetz zugeordnet sind. Mit 16 ist der Punkt bezeichnet, über den ein Fremdstart erfolgen kann.

Zum Zeitpunkt T₂ wird der Konverter 6 mit dem Ultra Cap 4 verbunden, um die gespeicherte Energie weiter bis ca. 15 -20V zu nutzen. Nach Erreichung dieser Spannung wird der DC-Konverter 6 wieder an die Leitung 5, also auf die höhere Spannung geschaltet, um das 12V-Netz zu versorgen. Auch hier kann zur Entlastung der Kontakte der DC-Konverter kurzzeitig abgeschaltet werden. Als Alternative zum Schalter können auch Mosfet verwendet werden. Nach dem Stand der Technik ist der Übergangs- oder Verlustwiderstand allerdings um das 20 - 50-fache höher.

Zum Zeitpunkt T₁' erfolgt die nächste Rekuperation. Man kann im günstigsten Fall davon·ausgehen, dass der mittlere Zeitabstand bis zur nächsten Rekuperation um den Faktor 10 größer ist als die Rekuperationsphase R.

In der Rekuperationsphase R ist gestrichelt der Spannungsverlauf der Verbraucher 7a mit dem Puffer 13/14 eingezeichnet. Strichpunktiert ist der Verlauf gezeichnet, wenn bei der Rekuperation beim Aufladen nicht die maximale Spannung erreicht wird. Der Ablauf ist dabei derselbe: Nach Ende der Einspeisung in den Ultra Cap, z. B. nach Zurücknahme des Bremspedals wird der Generator 1 abgeschaltet und erst wieder eingeschaltet, wenn die obengenannte Spannungsgrenze von z. B. 30V erreicht ist.

Liegt das Ende der Rekuperation unter 30V, so wird nur kurzzeitig der ISG 1 und die 42V Verbraucher abgeschaltet, damit der Schalter 2 stromlos umgeschaltet werden kann. Auch wenn der Schalter 15 verwendet wird, ist in der Umschaltphase der ISG1 abgeschaltet. Sobald Schalter 2 offen ist, wird der Schalter 15 wieder geschlossen.

Sollte innerhalb der Rekuperation ein Verbraucher mit hoher Priorität, z. B. die Servolenkung in der Phase niedriger Spannung z. B. bei T₃ mit hoher Leistung, z. B. bei entsprechendem Lenkmanöver versorgt werden müssen, so erfolgt unmittelbar nach der kurzzeitigen Abschaltung des Generators 1 und der 42V Lasten die Abschaltung des Ultra Caps 4 und Umschaltung auf volle Generatorspannung im Bordnetz. In der Phase der Umschaltung wird die Servolenkung über einen Kondensator 17 entsprechend dem der Verbraucher 7a versorgt.

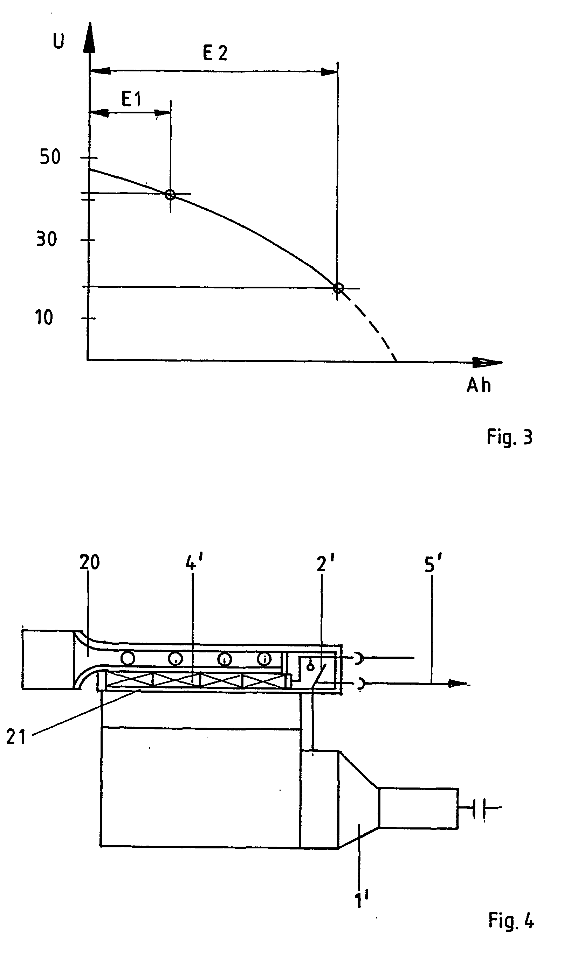

Fig. 3 zeigt die Entlade/Ladekennlinie des Ultra Cap 4. Hier ist deutlich die größere nutzbare Energiemenge E2 bei großem Spannungshub (48V - 20V) im Vergleich zu E1 zu sehen. Wenn nach dem Stand der Technik der Ultra Cap parallel zu Batterie geschaltet ist, kann er nur in einem schmalen Spannungsbereich, z. B. 42 - 36V genutzt werden wegen der oberen und unteren Spannungsgrenze der Batterie.

Fig. 4 zeigt die örtliche Anordnung des Ultra Cap 4 im Ansaugrohr 20 und in der Nähe des Startergenerators 1'. Da bei der Rekuperation große Ströme fließen, ist es vorteilhaft den Ultra Cap in der Nähe des Generators 1' anzubringen. Hier bietet sich besonders das Saugrohr 20 an, da die Ansaugluft relativ kühl ist. Der Ultra Cap kann auf einer Aluminiumplatte 21 z. B. mit Kühlrippen montiert werden.

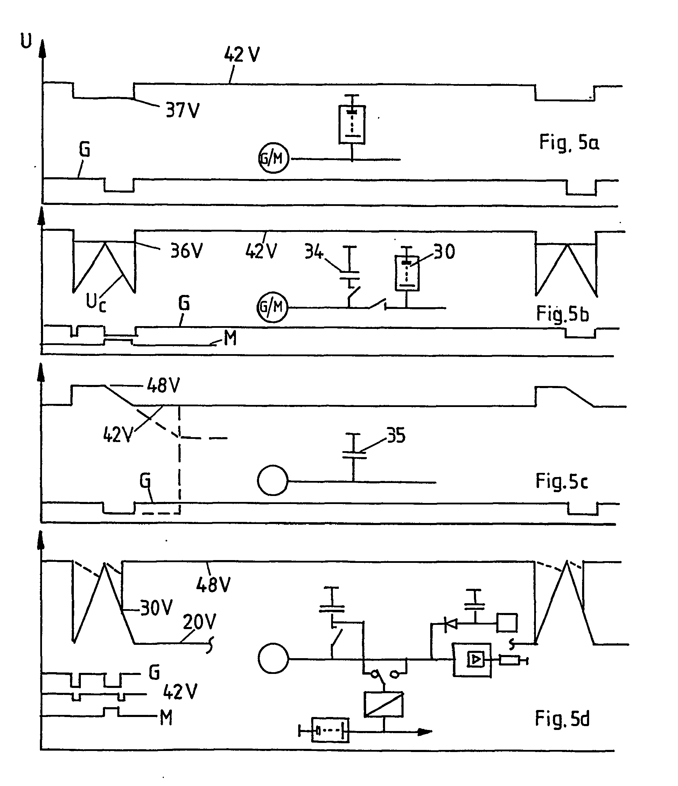

Fig. 5a bis 5c zeigen verschiedene Speicherkonzepte für die Rekuperation im Vergleich mit der Erfindung (Fig. 5d).

Fig. 5a zeigt eine Lösung nur mit einer Batterie. Bei der Rekuperation fällt die Spannung von 42V auf ca. 37V ab. Die obere Spannung ist durch die Belastbarkeit der Batterie gegeben und liegt im Bereich 42V.

Fig. 5b zeigt eine Lösung entsprechend der älteren Anmeldung 101 158 34. In der Rekuperationsphase werden hier die Verbraucher von einer 36V Batterie 30 versorgt. In der Rekuperationsphase ist die Spannung des Ultra Cap 34 niedriger. Der Energieverbrauch erfolgt vorwiegend über den Motor.

Fig. 5c zeigt die im Stand der Technik beschriebenen Lösung mit Ultra Cap 35 im 42V Netz. Hier wird bei der Rekuperation der Ultra Cap 35 auf die maximale Spannung von 48V geladen und anschließend bei abgeschaltetem Generator die Energie rückgeführt bis 42V erreicht sind. Es wäre auch möglich wie gestrichelt gezeichnet den Ultra Cap auf eine niedrige Spannung zu entladen und erst bei der nächsten Rekuperation wieder zu laden. Hier wäre aber über längere Zeit eine niedrige Bordnetzspannung mit schlechten Wirkungsgrad gegeben, wenn gleiche Leistung verlangt wird. Dies ist für viele Verbraucher, wie elektrische Servolenkung oder elektromagnetische Ventilsteuerung ungünstig.

Fig. 5d zeigt die in Fig. 1 und 2 beschriebene, erfindungsgemäße Lösung, welche die Energie wegen des großen Spannungshubs (48V bis 15V), erheblich besser umsetzt, da hier keine Batterie im 42V Netz die Spannung begrenzt. Sie weist eine hohe mittlere Nennspannung von ca. 48V und damit einen hohen Wirkungsgrad des Startergenerators und z. B. der elektromagnetischen Ventilsteuerung auf. Bei Fremdstart ist die Ladezeit des Energiespeichers weniger als 20% im Vergleich zur Batterie. Die Verwendung des Ultra Cap zum Starten anstatt einer Batterie bringt eine hohe Leistungsverbesserung.

Bei dem Konzept der Fig. 5c wird im Gegensatz zur Erfindung die Speicherenergie schlecht genutzt, da nur ein geringer Spannungshub ausgenutzt wird. Außerdem ist für die Speicherung der Energie hier ein größerer Speicher notwendig, was ein größeres Gewicht und größeres Volumen bedeutet. Gegenüber dem Konzept der Fig. 5b wird bei der Erfindung eine Batterie eingespart, also die Kosten, das Gewicht und das Einbauvolumen reduziert. Auch wird bei der Erfindung, da keine 42V Batterie vorgesehen ist, die Betriebsspannung nicht auf 42V begrenzt.

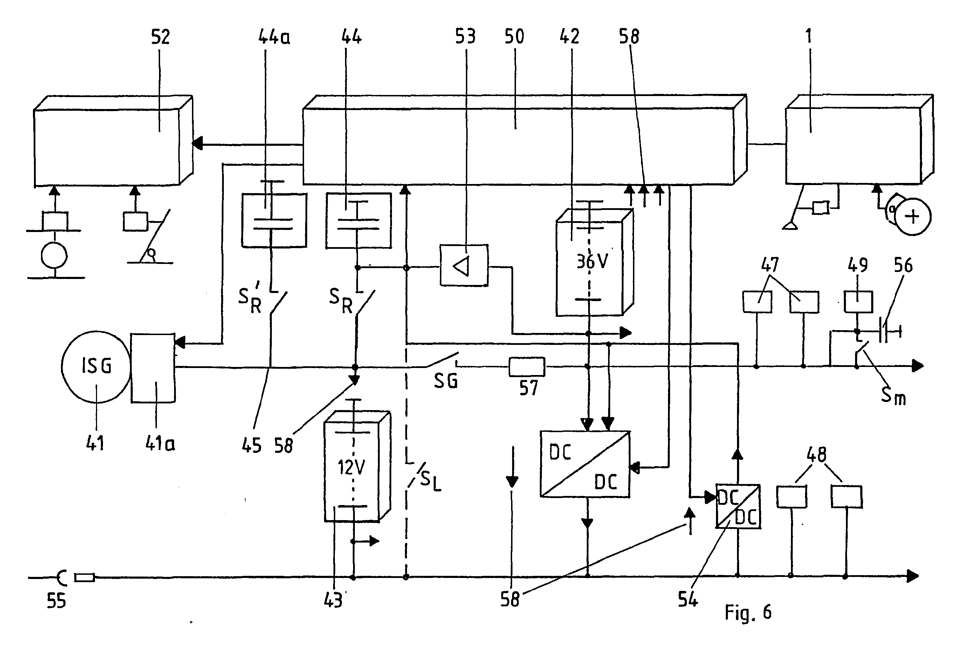

Fig. 6 ,zeigt ein Ausführungsbeispiel mit integriertem Startergenerator (ISG) 41, eine 36V-Batterie 42, eine 12V-Batterie 43, sowie einen Doppelschichtkondensator 44, z. B. einen Ultra Cap. Der ISG 41versorgt über die Verbindung 45 das 42V-Bordnetz und über einen 42/14V-Konverter 46 das 14V-Netz. An den Netzen sind Verbraucher 47 und 48 angeschlossen. Mit 49 ist die Motorsteuerung bezeichnet, welche über den Schalter Sₘ mit dem 42V-Netz verbunden werden kann. Der Ultra Cap 44 kann über Schalter S_{R} und S_{G} mit dem ISG 1 und dem 42V-Bordnetz verbunden werden. Eine wichtige Funktion in diesem Konzept kommt, wie vorn beschrieben der als Powermanagement 50 bezeichneten Steuerung zu.

Tritt ein Bremsvorgang ein, so wird der ISG 41 durch den Block 41a kurzzeitig auf nahezu 0 Ausgangsstrom geschaltet und anschließend wird der Schalter S_{R} geschlossen und der Schalter S_{G} geöffnet. Daraufhin wird der ISG 41 auf volle Leistung zur Ladung des Ultra Cap 44 geschaltet. Nach Abschluss des Bremsvorganges oder bei vollem Speicher wird der ISG 41 durch Öffnen von S_{R} wieder abgeschaltet. Im anschließenden Fahrbetrieb wird der ISG 41 als Elektromotor betrieben, wobei die Ladung des Ultra Cap 44 zu dessen Antrieb und gegebenenfalls für das Bordnetz benutzt wird. Ist die Ladung umgesetzt, z. B. Entladung bis auf wenige Volt, so wird der Strom zum Motor im Schaltblock 41a kurzzeitig abgeschaltet. Anschließend wird der Schalter S_{R} geöffnet und S_{G} geschlossen, so dass der Generator wieder das Bordnetz bedarfsgesteuert vom Powermanagement versorgt. Auch hier zeigt sich der Vorteil der getrennten An- und Abschaltung des Ultra Cap 44, wobei nahezu der volle Spannungsbereich umgesetzt wird.

Während der Rekuperation versorgen beide Batterien 42 und 43 ihre Verbraucher 47 bzw.48. Da die Rekuperationsphase kurz gegenüber dem Normalbetrieb ist, ist die Energieaufnahme aus den Batterien im Mittel nur ca. 0,1Ah, was die Batterie in der sogenannten Zyklentiefe wenig beansprucht. Darüber hinaus können starke Verbraucher, wie die Heizungen in dieser Rekuperationsphase gedrosselt oder gar abgeschaltet und anschließend gegebenenfalls als Ausgleich mit mehr Leistung versorgt werden, was durch entsprechende Änderung des getakteten Betriebes möglich ist.

Es ist auch möglich durch entsprechende Schaltung der Schalter S_{R} und S_{G} in der Antriebsphase des Motors mittels des Ultra Cap das 42V-Bordnetz vom Ultra Cap abzuschalten. Dagegen kann beim Laden das 42V-Bordnetz über eine nicht dargestellte Diode oder einen Mosfet versorgt werden, bis der Ultra Cap geladen ist.

Anstelle der vollen Entladung über den elektrischen Antriebsmotor kann auch über die Leitung 45 der DC/DC-Konverter 46 und damit die Batterie 43 teilweise vom Ultra Cap 44 versorgt werden. Es ist auch denkbar, dass beide Bordnetze in Abhängigkeit von der Spannungslage vom Ultra Cap versorgt werden.

Der Ultra Cap 44 wird auch zum Starten verwendet. Ist der Fahrzeugmotor stillgesetzt, so kann über die Endstufe 53 oder einen entsprechenden Schalter der Ultra Cap 44 von der Batterie 42 aufgeladen werden. Bei längerem Stand wird der relativ kleine Entladestrom von ca. 1mA in größeren Zeitabständen von der Batterie 42 ausgeglichen. Wird hierdurch eine gewisse Entladung erreicht, z. B. 50%, so erfolgt der Ausgleich nachfolgend aus der Batterie 43 und zwar über einen vom Powermanagement gesteuerten DC/DC-Konverter 54. Ist auch in dieser Batterie 43 nur noch ca. 50% Ladung vorhanden, so wird auch hier der Ausgleich abgeschaltet. Dies ist erst nach ca. 24 Monaten Stillstand der Fall. Bei der Entladung ist zusätzlich der Ruhestromverbrauch der z. B. sicherheitsrelevanten Systeme, wie Diebstahlwarnung usw. zu berücksichtigen.

Abhängig vom Ladezustand werden die Ruhestromverbraucher durch ein Ruhestrommanagement in einer festgelegten Reihenfolge abgeschaltet, wobei als letzte System, z. B. die Diebstahlsicherung abgeschaltet wird. Diese Abschaltung wird vom Powermanagement 50 durchgeführt, wobei intelligente Stromverteiler zur Durchführung notwendig sind.

Die Ausführungen zeigen, dass auch beim Ausfall einer Batterie der Ultra Cap 44 immer startfähig ist. In Anbetracht des kleinen Innenwiderstands des Ultra Cap 44 genügt eine Auslegung mit weniger Zellen auf eine niedrige Klemmenspannung von z. B. 30V. Damit ist bei entsprechender Kapazität immer, insbesondere aber bei tiefen Temperaturen, eine deutlich höhere, z. B. 2-fache Startleistung im Vergleich zur konventionellen 36V-Batterie gegeben, da hier die Klemmenspannung bei den hohen Startströmen des ISG viel stärker abfällt als beim Ultra Cap.

Der Ultra Cap 44 ist in seiner Speicherkapazität auf eine Rekuperation ausgelegt, die z, B. 0,8Ah entsprechend 5kW über 20s Abbremsung entspricht. Dies entspricht einem Spannungsbereich vom 0 - 30V. Dies hat den Vorteil, dass die Speicherladezeit bei Ausfall beider Batterien nur ca. eine Minute dauert, im Vergleich zu 11 Minuten beim eingangs erwähnten Fall. Dies eröffnet auch die Möglichkeit einen erheblich kostengünstigeren DC-Konverter mit geringerer Leistung einzusetzen. Sind beide Batterien ausgefallen, so wird über den Fremdstartstützpunkt 55 eine externe Spannungsquelle angeschlossen. Hierbei muss eine mögliche Verpolung berücksichtigt werden. Bei richtiger Polung wird über den DC/DC-Konverter 54 der Ultra Cap 44 aufgeladen. In diesem Fall wird beim Starten die Motorsteuerung 49 vom Speicher 44 versorgt, damit beim Starten die Motorsteuerung funktionsfähig ist. Der Speicher 56 ist, insbesondere bei elektromagnetischer Ventilsteuerung für den impulsartigen Betrieb der Aktuatoren notwendig. Zum Starten ist der Schalter S_{G} geöffnet, um zu verhindern, dass die Ladung in das 42V-Netz gelangt.

Läuft der Motor und es wird Generatorstrom geliefert, so erfolgt ein Umschalten mittels des Schalters S_{G} auf Bordnetzversorgung.

Auch ist es denkbar das 12V-Netz direkt vom Speicher 44, z. B. im Spannungsbereich 18 - 12V zu versorgen. Dazu ist die gestrichelt eingezeichnete Verbindung mit Schalter S_{L} oder ein entsprechender Mosfet notwendig.

Weiterhin kann bereits während der Ladung und Entladung des Ultra Caps 44 das 12V-Bordnetz über den Gleichspannungskonverter 46 mit variabler Tiefsetzung im Bereich 16 - 30V mit der Spannung des Ultra Cap 44 versorgt werden. Hierzu kann ein nicht gezeigter Schalter vor dem Konverter 46 von 42V-Versorgung auf Ultra Cap umgeschaltet werden.

Für das Powermanagement 50 ist es notwendig, die Messgrößen Spannung und Strom zu verarbeiten. Deshalb ist ein strommessendes Element 57 vorgesehen. Die entsprechenden, nicht vollständig eingezeichneten Messstellen, sind mit Pfeilen 58 markiert, ebenso die entsprechenden Eingänge zum Powermanagement 50.

Bei dieser Schaltung der Rekuperation ist berücksichtigt, dass bei kurz hintereinander folgenden Bremsungen der Speicher 44 möglichst häufig genutzt wird, wozu er aufnahmefähig sein soll. Daher wird auch im normalen Fahrbetrieb die Energie möglichst bald wieder entladen. Da häufig nach Abbremsungen sich ein Fahren mit konstanter Geschwindigkeit anschließt und der elektrische Antrieb dabei eingesetzt wird, wird hierdurch der elektrische Antrieb des Verbrennungsmotors stark entlastet. Findet anschließend eine Beschleunigung des Fahrzeugs statt, so kann bei vorausgegangener Konstantfahrt im Grenzfall bei bereits leerem Speicher 4 kein elektrischer Zusatzantrieb genutzt werden, um den Verbrennungsmotor zu unterstützen (kein Boosten).

Sollte dieses Boosten auch hier erwünscht sein, so könnte wie in Fig. 6 gezeigt ein zweiter Speicher 44a vorgesehen werden, welcher für diesen Fall des Boostbetriebs immer geladen ist. Hier erfolgt die Schaltung über S_{R}' und S_{G}.

Auch ist es denkbar einen Speicher größerer Kapazität einzusetzen, der so gesteuert wird, dass er durch den elektrischen Antrieb nur auf ca. 60% entladen wird und die Restladung für Boosten zur Verfügung steht. Der Nachteil besteht darin, dass hier die Spannung im Vergleich zum getrennten Boostspeicher geringer ist.

Es wurde oben erläutert, dass der Schalter S_{G} beim Entladen des Ultra Cap 44 zwecks Antreiben des ISG 41 geöffnet wird. In der Aufladephase des Ultra Cap 44 kann man alternativ wie folgt verfahren:
- man öffnet S_{G}. wenn der Generatorstrom für eine kurze Zeit auf einen kleinen Wert abgesunken ist und schließt danach S_{R}, so dass der Generatorstrom voll zum Ultra Cap gelangt.
- man bildet den Schalter S_{G} als Diode oder als steuerbare Einheit, z. B. als Mosfet aus, so dass kein Rückströmen der Ladung der Batterie 42 zum Ultra Cap 44 möglich ist. Auch hier kann man beim Laden den Mosfet öffnen und S_{R} schließen. Hier treten in der Diode, bzw. dem Mosfet, elektrische Verluste auf.
- man überbrückt den Schalter S_{G} mit einer steuerbaren Einheit, z. B. einem Mosfet 53. Ist hier S_{G} während der Ladung geöffnet, so entsteht nur während dieser Phase der Aufladung Verlustleistung im Mosfet. Im Normalfall bei Versorgung des Bordnetzes durch den Generator ISG ist S_{G} geschlossen, so dass nur sehr geringe Verluste entstehen.

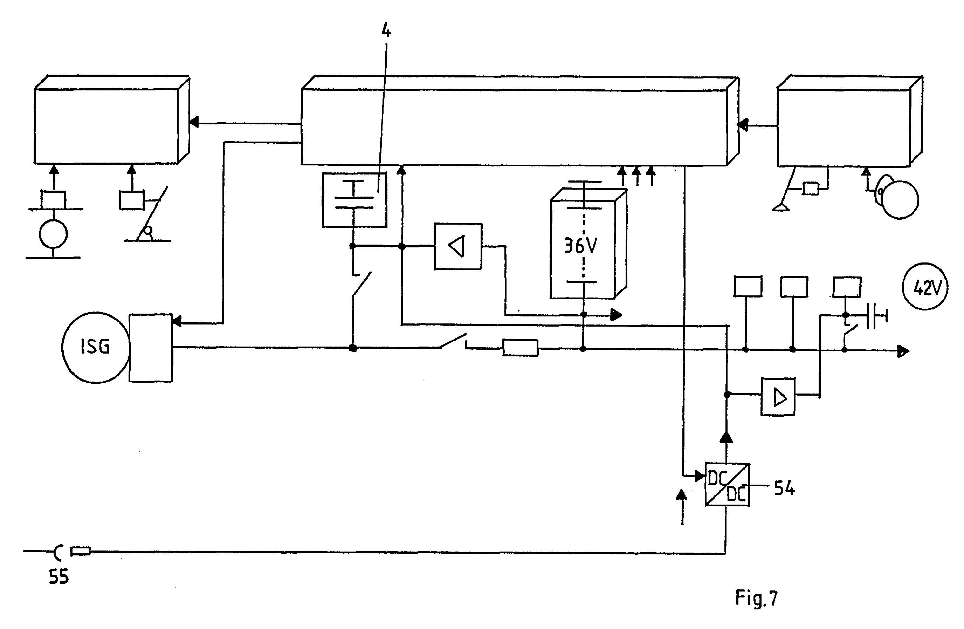

Das vorgeschlagene Speicherkonzept ist auch bei einem ausschließlich 42V-Bordnetz entsprechend Fig. 7 anwendbar. Die Schaltung des Ultra Cap ist identisch. Es fehlt nur die 12V-Batterie. Wegen der oben genannten Fakten ist der Fremdstart über 12V- Stützpunkt 56' und den Gleichspannungskonverter 54' möglich. Die Speicherladung erfolgt wie in Fig. 1.

Alternativ wäre auch ein Fremdstart über 42V möglich. Die Schalter S_{R} und S_{G} können über entsprechende Relais als einfacher Verpolschutz verwendet werden

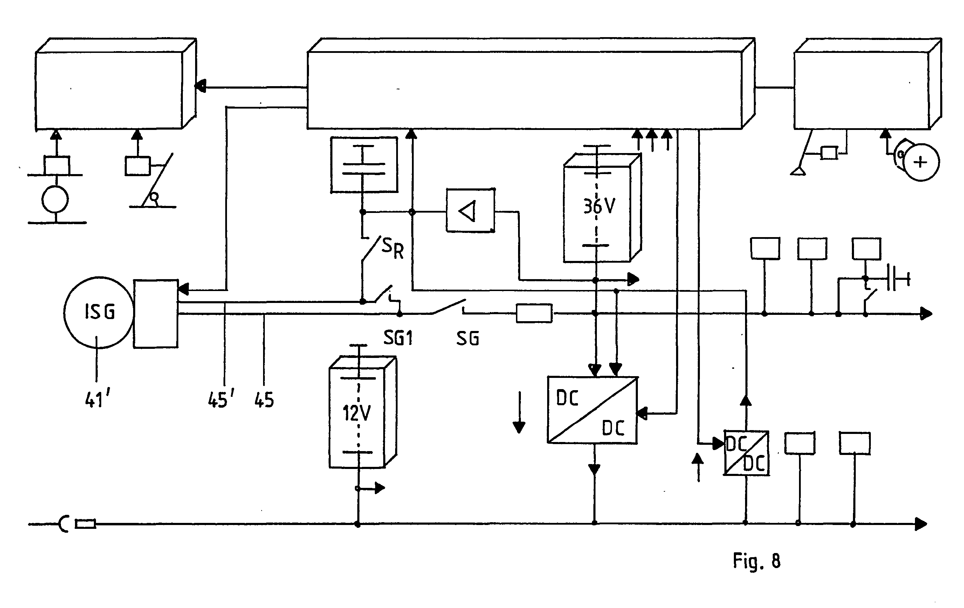

Fig. 8 entspricht weitgehend der Fig. 6. Um die Unterbrechung der Stromzuführung durch den Generator während der Rekuperation zu vermeiden, ist hier ein zweikanaliger ISG41' mit 2-kanaligem Pulswechselrichter vorgesehen. Hierbei erfolgt die Rekuperation und der Start über einen getrennten Kanal 45'. Außerdem ist es denkbar über einen zusätzlichen Schalter S_{G1} außerhalb der Rekuperation beide Kanäle zusammen zu schalten. Dieselbe Schaltung ist auch in Fig. 7 nur für 42V-Netz möglich.

Anstelle des Doppelschichtkondensators 4 ist auch eine andere Technologie des speicherns möglich, welche folgende Forderungen erfüllt:
- guter Wirkungsgrad beim Laden und Entladen
- hochzyklenfest (>300 000)
- akzeptable Baugröße, Gewicht und Volumen.

Die Verwendung des Ultra Cap oder eines entsprechenden Speichers zur Rekuperation und zum Starten entlastet die konventionelle Batterie sehr stark, so dass für diese kleinere Baugrößen möglich sind. Auch sind neue Batterietechnologien anwendbar, da der kleine Innenwiderstand zum Starten mit der hohen Strombelastung nicht mehr notwendig ist

Die Schalter S_{R}, S_{G}, S_{M}, S_{L}, können Halbleiterschalter sein, vorzugsweise sind es Relais.

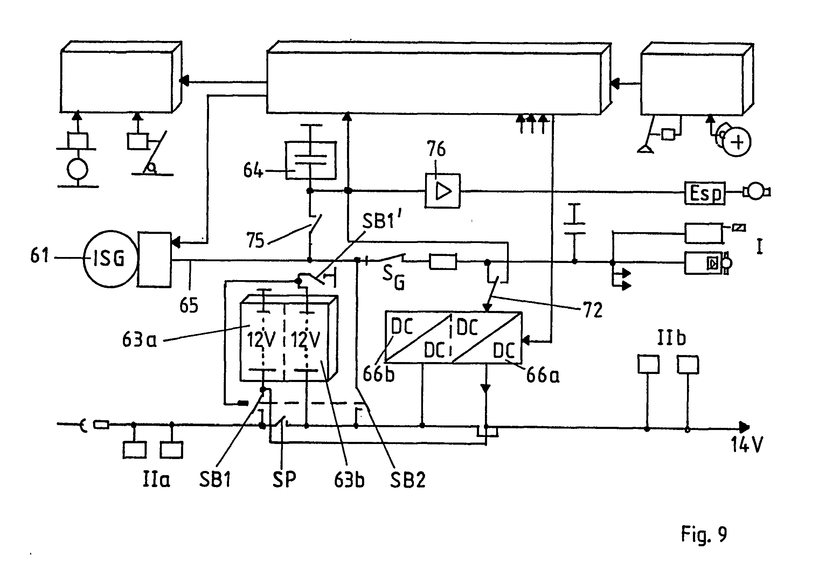

Die Ausbildung der Fig. 9 unterscheidet sich von der der Fig. 1 dadurch, dass die Batterie 3 als Doppelbatterie 63a und 63b ausgebildet ist. Den Batterien sind je ein Gleichspannungskonverter 66a und 66b zugeordnet, deren Ausgänge, bzw. Eingänge zum, bzw. vom Schalter 72 parallelgeschaltet sind. Man kann durch Schalter S_{B1} und S_{B1'} die beiden Batterien 63a und 63b in Reihe schalten und deren Spannung über einen Schalter S_{B2} direkt an den Startergenerator 61 anlegen. Hiermit kann bei Ausfall des Energiespeichers 64 der Startergenerator 61 mit einer 24V-Batterie zumindest bei nicht zu tiefen Temperaturen gestartet, bzw. der Elektromotor des Startergenerators 61 z. B. zum Stop- and Go-Betrieb angetrieben werden. Auch könnte man bei Ausfall des Gleichspannungskonverters 66a/66b über diese Verbindung und den Schalter 75 den Energiespeicher neu laden.

In Fig. 9 sind den beiden Batterien 63a und 63b getrennte Gruppen von Verbrauchern IIa und IIb zugeordnet. Die beiden Batterien können durch einen Schalter Sₚ parallel geschaltet werden.

Wenn die elektrische Servolenkung ESP im Verbraucherkreis zum Einsatz kommt, und gleichzeitig der Energiespeicher 64 im Bremsfall geladen wird oder zur Antriebsunterstützung entladen wird, so kann die Servolenkung, die hohe Leistung erfordert, nicht ausreichend versorgt werden. Es wird hierfür ein steuerbarer Schalter 76, z. B. ein Mosfet in eine Verbindungsleitung zwischen Energiespeicher 64 und die Servolenkung ESP eingeschaltet, der dann auf Durchlass geschaltet wird. Man kann in diesem Fall den DC-Konverter auch kurzzeitig überlasten.

Man wird vorzugsweise Verbraucher mit hoher Ruhestrompriorität, z. B. die Diebstahlsicherung dem Verbraucherkreis • zuordnen.

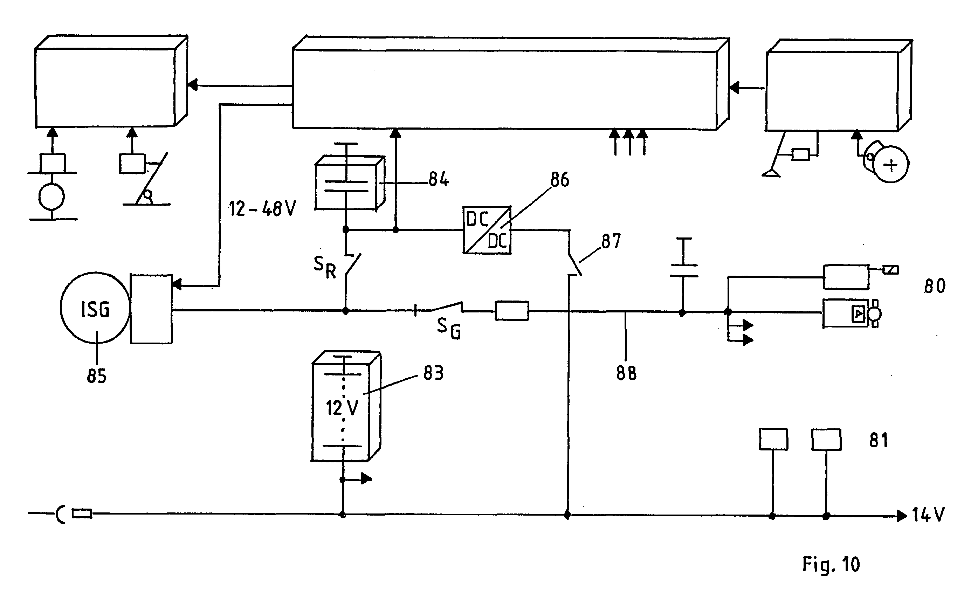

In Fig. 10 ist ein alternativer Aufbau des Antriebs gezeigt. Hier sind nur 14 V-Verbraucher 80 und 81 vorgesehen. Der Energiespeicher 84 ist auch hier im Bereich von 12 bis höheren Spannungen z. B. 48V aufladbar, das heißt, dass die oben erwähnten Vorteile des mit hoher Spannungsdifferenz arbeitenden Energiespeichers 84 nämlich die Speicherung einer größeren Energiemenge auch hier vorliegen. Die Versorgung des 14V-Bordnetzes 80 und 81 und das Aufladen der Batterie 83, wenn notwendig erfolgt bei geschlossenem Schalter s_{g} direkt von Startergenerator 85, wozu dieser entsprechend umgeschaltet wird. Sie kann jedoch auch zeit- und /oder teilweise vom Energiespeicher 84 über einen Spannungskonverter 86 erfolgen, wenn ein Schalter 87 geschlossen ist, bzw. bei nicht vorhandenem Schalter 87 der Spannungskonverter 86 entsprechend geschaltet wird. Dies kann auch schon während des Aufladens des Energiespeichers 84 im Verzögerungs- bzw. Bremsfall erfolgen. Auch bei diesem Ausführungsbeispiel kann man von dem Vorhandensein zweier Bordnetze sprechen, wobei in das Hochspannungsbordnetz nur der Energiespeicher einbezogen ist.

Der Witz besteht, wie gesagt, darin, dass durch den großen Spannungsbereich eine größere Energie gespeichert wird. Daher wird dieser Spannungsbereich vorwiegend zur Rekuperation genutzt. Damit in der Rekuperationsphase die Batterie 83 nicht so stark beansprucht wird, kann man die Batterie 83 durch den Spannungskonverter 86 entlasten, indem man vom Energiespeicher mit variablem Obersetzungsverhältnis das 14V-Bordnetz versorgt.

## Patentansprüche

1. Antrieb eines Kraftfahrzeuges mit
- einem Verbrennungsmotor,
- einem integriertem Startergenerator (1)
- einem Schaltblock (1a), der zwischen dem Startgenerator und einem Hochspannungsbordnetz (5) angeordnet ist,
- wenigstens einem Energiespeicher (4),
- einem Niederspannungsbordnetz (5a),
- wenigstens einer Niederspannungsbatterie (3),
- einem Gleichspannungskonverter (6), über den die Niederspannungsbatterie (3) mit dem Hochspannungsnetz (5) verbunden ist,
- Schaltelementen (2, 12, 15), die ein zwischen Energiespeicher (4) und dem Hochspannungsnetz (5) angeordnetes erstes Schaltelement (2) und den Schaltblock (1a) umfassen,
- und eine Steuerung (10) für die Steuerung der Schaltelemente (2, 12, 15) umfassen, wobei das erste Schaltelement (2) und die Steuerung (10) in Abhängigkeit vom Betriebszustand des Fahrzeuges und/oder der Ladung oder der Spannung des Energiespeichers (4) umschalten zwischen
- Laden des Energiespeichers (4) durch den Startergenerator (1),
- Betrieb des Startergenerators (1) als Antriebsmotor gespeist vom Energiespeicher (4),
**dadurch gekennzeichnet, dass**
die Schaltelemente (2, 12, 15) und die Steuerung (10) in Abhängigkeit vom Betriebszustand des Fahrzeuges und/oder der Ladung oder der Spannung des Energiespeichers (4) auch umschalten zwischen
- Versorgung des Hochspannungsnetzes (5) vom als Generator arbeitenden Startergenerator (1) oder
- Versorgung des Hochspannungsnetzes durch die Niederspannungsbatterie (3).

2. Antrieb nach Anspruch 1, **dadurch gekennzeichnet, dass** die zusätzlichen Schaltmittel (12, 15) ein zweites Schaltmittel (15) umfassen, und das zweite Schaltmittel (15) zwischen den Verbrauchern und dem Verbindungspunkt (15'), bei dem die elektrischen Leitungen, welche das Schaltmittel (2) mit dem Schaltblock, insbesondere dem Pulswechselrichter (1a) verbinden zusammentreffen, geschaltet ist.

3. Antrieb nach Anspruch 1 oder 2, **dadurch gekennzeichnet, dass** der Startergenerator (1) als Antriebsmotor zur Fahrunterstützung des Verbrennungsmotors während des Fahrbetriebs genutzt wird.

4. Antrieb nach einem der Ansprüche 1 bis 3, **dadurch gekennzeichnet, dass** der Startergenerator (1) als zusätzlicher Antriebsmotor beim schnellen Anfahren ausgenutzt wird.

5. Antrieb nach einem der Ansprüche 1 bis 4, **dadurch gekennzeichnet, dass** der Startergenerator (1) als alleiniger Antriebsmotor bei Stop- and Go-Betrieb durch Speisung durch den Energiespeicher oder die Batterie genutzt wird.

6. Antrieb nach einem der Ansprüche 1 bis 5, **dadurch gekennzeichnet, dass** der Energiespeicher (4) mittels der Niederspannungsbatterie (3) über den Gleichspannungskonverter (6) aufladbar ist.

7. Antrieb nach Anspruch 6, **dadurch gekennzeichnet, dass** der Ausgang des Gleichspannungskonverters (6) an den Energiespeicher (4) zu dessen Ladung anschaltbar ist.

8. Antrieb nach Anspruch 6 oder 7, **dadurch gekennzeichnet, dass** die Niederspannungsbatterie (3) über den Gleichspannungskonverter (6) vom Hochspannungsnetz (5) her aufladbar ist.

9. Antrieb nach einem der Ansprüche 6 bis 8, **dadurch gekennzeichnet, dass** Verbrauchern (8; 7a,7b) teilweise dem Niederspannungsnetz (5a) und teilweise dem Hochspannungsnetz (5) zugeordnet sind.

10. Antrieb nach Anspruch 9, **dadurch gekennzeichnet, dass** die Verbraucher (7a,7b) des Hochspannungsnetzes wenigstens teilweise und/oder gegebenenfalls zeitweise vom Energiespeicher (4) versorgt werden.

11. Antrieb nach einem der Ansprüche 8 bis 10, **dadurch gekennzeichnet, dass** die Verbraucher (8) des Niederspannungsnetzes wenigstens teilweise und gegebenenfalls die Batterie (3) über den Gleichspannungskonverter (6) vom Hochspannungsnetz (5) versorgt, bzw. aufgeladen werden.

12. Antrieb nach einem der Ansprüche 8 bis 10, **dadurch gekennzeichnet, dass** die Verbraucher (8) des Niederspannungsnetzes wenigstens teilweise und gegebenenfalls die Batterie (3) über den Gleichspannungskonverter (6) zeitweise vom Energiespeicher (4) versorgt, bzw. aufgeladen werden.

13. Antrieb nach einem der Ansprüche 9 bis 12, **dadurch gekennzeichnet, dass** Verbraucher (IIa/IIb) des Niederspannungsnetzes bei niedrigem Ladezustand der Batterie (63) wenigstens teilweise abgeschaltet werden.

14. Antrieb nach einem der Ansprüche 1 bis 13, **dadurch gekennzeichnet, dass** die Batterie aus zwei Batterien (63a, 63b) besteht.

15. Antrieb nach Anspruch 14, **dadurch gekennzeichnet, dass** jeder Batterie (63a, 63b) ein Gleichspannungskonverter (66a, bzw. 66b) zugeordnet ist.

16. Antrieb nach Anspruch 15, **dadurch gekennzeichnet, dass** bei Ausfall eines Gleichspannungskonverters (66a oder 66b), die Batterien (63a und 63b) parallel geschaltet mit den andern (66b oder 66a) verbunden werden.

17. Antrieb nach Anspruch 15 oder 16, **dadurch gekennzeichnet, dass** bei Ausfall einer Batterie (63a, bzw. 63b) die intakte Batterie (63b oder 63a) mit beiden Gleichspannungskonvertern (66a und 66b) verbunden wird.

18. Antrieb nach einem der Ansprüche 11 bis 17, **dadurch gekennzeichnet, dass** die Verbraucher des Niederspannungsnetzes in zwei Gruppen (IIa/IIb) unterteilt sind, von denen die eine Gruppe (IIa) abschaltbar ist.

19. Antrieb nach Anspruch 16 oder 17 und 18, **dadurch gekennzeichnet, dass** die beiden Gruppen von Verbrauchern (IIa und IIb) parallelgeschaltet werden.

20. Antrieb nach einem der Ansprüche 1 bis 19, **dadurch gekennzeichnet, dass** zum Starten des Verbrennungsmotors der Startergenerator (1) mit dem Energiespeicher (4) verbunden wird.

21. Antrieb nach einem der Ansprüche 14 bis 19, **dadurch gekennzeichnet, dass** bei Ausfall der normalen Startmöglichkeit mittels des Energiespeichers (64)die beiden Batterien (63a und 63b) in Reihe geschaltet mit dem Startergenerator (61) verbunden werden.

22. Antrieb nach einem der Ansprüche 1 bis 21, **dadurch gekennzeichnet, dass** die Schaltmittel (2, 12, 15) und die Steuerung (10) nach Erreichen einer vorgegebenen, abgesunkenen Spannung oder Ladung des Energiespeichers (4) während der Verbrauchsphase des Antriebsmotors diesen vom Energiespeicher (4) trennen und die Generatorfunktion des Startergenerators (1) im Bordnetz (5) wirksam machen.

23. Antrieb nach einem der Ansprüche 14 bis 22, **dadurch gekennzeichnet, dass** der Startergenerator (61) zeitweise durch die in Reihe geschalteten Batterien (63a und 63b) als Antriebsmotor angetrieben wird,

24. Antrieb nach einem der Ansprüche 9 bis 23, **dadurch gekennzeichnet, dass** die Verbraucher (I) mit hoher Ruhestrompriorität dem Hochspannungsbordnetz (65) zugeordnet sind.

25. Antrieb nach Anspruch 1, **dadurch gekennzeichnet, dass** während des Fahrbetriebs die gespeicherte Energie zumindest zeitweise einem Bordnetz zugeführt wird.

26. Antrieb nach Anspruch 25, **dadurch gekennzeichnet, dass** bei Verwendung von zwei Bordnetzen mit unterschiedlicher Spannung die Speicherenergie dem Bordnetz (5) mit der höheren Spannung zugeführt wird.

27. Antrieb nach Anspruch 1, **dadurch gekennzeichnet, dass** bei Verwendung von zwei Bordnetzen mit unterschiedlicher Spannung bereits während der Ladung und der Entladung des Energiespeichers (4) das Bordnetz mit der niedrigeren Spannung vom Energiespeicher (4) versorgt wird.

28. Antrieb nach Anspruch 1, **dadurch gekennzeichnet, dass** in der Antriebsphase des Startergenerators (1) durch die Energie des Energiespeichers (4) das Bordnetz (5) vom Energiespeicher (4) abgeschaltet ist.

29. Antrieb nach einem der Ansprüche 1 bis 28, **dadurch gekennzeichnet, dass** die Steuerung (10) die Schaltelemente (S_{R}, S_{G}) derart steuert, dass bei Fahrzeugstillstand der Energiespeicher (4) von der Batterie (3) weitgehend aufgeladen wird.

30. Antrieb nach einem der Ansprüche 1 bis 29, **dadurch gekennzeichnet, dass** zum Energiespeicher (4) ein zweiter Energiespeicher (4a) parallel geschaltet ist und dass die Energie eines dieser Energiespeicher (4 oder 4a) nur zum Beschleunigen (Boosten) verwendet wird.

31. Antrieb nach Anspruch 1 bis 30, **dadurch gekennzeichnet, dass** die Steuerung derart ausgelegt ist, dass der Energiespeicher (4) eine Restladung für eine folgende Beschleunigungsphase behält.

32. Antrieb nach einem der Ansprüche 1 bis 31, **dadurch gekennzeichnet, dass** der Startergenerator (1) zwei Ausgangskanäle (5, 5') aufweist, von denen einer (5) zum Bordnetz und der andere (5`) zum Energiespeicher (4) führt.

33. Antrieb nach einem der Ansprüche 1 bis 32, **dadurch gekennzeichnet, dass** zum Notstart ein Fremdstützpunkt (16) mit der niedrigen Spannung vorgesehen ist.

34. Antrieb nach einem der Ansprüche 1 bis 32, **dadurch gekennzeichnet, dass** zum Notstart ein Fremdstützpunkt mit der höheren Spannung vorgesehen ist.

35. Antrieb nach einem der Ansprüche 1 bis 34, **dadurch gekennzeichnet, dass** der Energiespeicher (4) ein Doppelschichtkondensator, vorzugsweise mit geringen Innenwiderstand, insbesondere ein Ultra Cap ist.

36. Antrieb nach einem der Ansprüche 1 bis 35, **dadurch gekennzeichnet, dass** der Energiespeicher auf eine kleinere Spannung (z. B. 30V) als die Spannung des ersten Bordnetzes dimensioniert ist.

37. Antrieb nach einem der Ansprüche 1 bis 36, **dadurch gekennzeichnet, dass** der Energiespeicher (4) auf eine geringe Speicherkapazität ausgelegt ist.

38. Antrieb nach einem der Ansprüche 1 bis 37, **dadurch gekennzeichnet, dass** während der Aufladung des Energiespeichers (4) während der Rekuperation Verbraucher abgeschaltet und/oder gedrosselt versorgt wird.

39. Antrieb nach einem der Ansprüche 1 bis 38, **dadurch gekennzeichnet, dass** die Steuerung (10) als Ruhestrommanagement während einer längeren Stillstandszeit des Fahrzeuges abhängig vom Ladezustand der Batterien (2, 3) die Ruhestromverbraucher in einer Prioritätsfolge abschaltet oder den Ruhestromverbrauch durch eine größere Weckzyklenzeit reduziert.

40. Antrieb nach einem der Ansprüche 6 bis 39, **dadurch gekennzeichnet, dass** jedes der Bordnetze (45, 45a) eine Batterie (42, 43) aufweist.

41. Antrieb nach einem der Ansprüche 1 bis 5, **dadurch gekennzeichnet, dass** das Bordnetz (88) in das die Verbraucher (80, 81) einbezogen sind, ein Niederspannungsbordnetz ist.

42. Antrieb nach Anspruch 41, **dadurch gekennzeichnet, dass** das Bordnetz (88) wenigstens teil- und/oder zeitweise vom Energiespeicher (84) über einen Spannungskonverter (86) versorgt wird.

43. Antrieb nach Anspruch '42, **dadurch gekennzeichnet, dass** das Bordnetz (88) auch während des Ladens des Energiespeichers (84) wenigstens teil- und/oder zeitweise vom Energiespeicher (84) versorgt wird.

## Claims

1. Drive for a motor vehicle with
- an internal combustion engine,
- an integrated starter-generator (1),
- a switching block (1a), disposed between the starter-generator and a high-voltage onboard vehicle electrical system (5),
- at least one energy store (4),
- a low-voltage onboard vehicle electrical system (5a),
- at least one low-voltage battery (3),
- a DC voltage converter (6), via which the low-voltage battery (3) is connected with the high-voltage system (5),
- switching elements (2, 12, 15), comprising a first switching element (2) disposed between the energy store (4) and the high-voltage network (5) and the switch block (1a),
- and comprising a controller (10) for controlling the switching elements (2, 12, 15), wherein the first switching element (2) and the controller (10) depending on the operating state of the vehicle and/or the charge or the voltage of the energy storage (4) switch between
- charging the energy store (4) by the starter-generator (1),
- operation of the starter generator (1) as a drive motor fed from the energy store (4),
**characterised in that**
the switching elements (2, 12, 15) and the controller (10) depending on the operating state of the vehicle and/or the charge or the voltage of the energy storage (4) also switch between
- supply of the high-voltage network (5) from the starter generator functioning as a generator (1) or
- supply of the high-voltage network by the low-voltage battery (3).

2. Drive according to claim 1, **characterised in that** the additional switching means (12, 15) comprise a second switching means (15), and **in that** the second switching means (15) is connected between the loads and the connection point (15') at which the electrical lines connecting the switching means (2) with the switching block, especially the pulse-controlled inverter (1a), meet.

3. Drive according to claim 1 or 2, **characterised in that** the starter generator (1) is used as a drive motor for drive support of the combustion engine during driving operation.

4. Drive according to one of claims 1 to 3, **characterised in that** the starter generator (1) is utilized as an additional drive motor for fast starting.

5. Drive according to one of claims 1 to 4, **characterised in that** the starter generator (1) is used as a single drive motor in stop-and-go operation by powering through the energy store or battery.

6. Drive according to one of claims 1 to 5, **characterised in that** the energy store (4) can be charged by means of the low-voltage battery (3) via the DC voltage converter (6).

7. Drive according to claim 6, **characterised in that** the output of the DC voltage converter (6) can be connected to the energy store (4) to charge this.

8. Drive according to claim 6 or 7, **characterised in that** the low-voltage battery (3) can be charged via the DC voltage converter (6) from the high-voltage network (5).

9. Drive according to one of claims 6 to 8, **characterised in that** the loads (8, 7a, 7b) are associated in part with the low-voltage network (5a) and in part with the high-voltage network (5).

10. Drive according to claim 9, **characterised in that** the loads (7a, 7b) of the high-voltage network are supplied at least partially and/or possibly temporarily from the energy store (4).

11. Drive according to one of claims 8 to 10, **characterised in that** the loads (8) of the low voltage network are at least partially and possibly the battery (3) supplied or charged via the DC converter (6) from the high-voltage network (5).

12. Drive according to one of claims 8 to 10, **characterised in that** the loads (8) of the low-voltage network at least partially and possibly the battery (3) are supplied temporarily or charged from the energy store (4).

13. Drive according to one of claims 9 to 12, **characterised in that** loads (IIa / IIb) of the low voltage network are disconnected at a low charging state of the battery (63) at least partially.

14. Drive according to one of claims 1 to 13, **characterised in that** the battery comprises two batteries (63a, 63b).

15. Drive according to claim 14, **characterised in that** each battery (63a, 63b) is associated with a DC voltage converter (66a or 66b).

16. Drive according to claim 15, **characterised in that** in the event of failure of a DC voltage converter (66a or 66b), the batteries (63a and 63b) are connected in parallel with the others (66a or 66b).

17. Drive according to claim 15 or 16, **characterised in that** in the event of failure of a battery (63a or 63b) the intact battery (63b or 63a) is connected with both DC voltage converters (66a and 66b).

18. Drive according to one of claims 11 to 17, **characterised in that** the loads of the low-voltage network are divided into two groups (IIa / IIb), of which one group (IIa) can be disconnected.

19. Drive according to claim 16 or 17 and 18, **characterised in that** the two groups of users (IIa and IIb) are connected in parallel.

20. Drive according to one of claims 1 to 19, **characterised in that** to start the combustion engine, the starter generator (1) is connected to the energy store (4).

21. Drive according to one of claims 14 to 19, **characterised in that**, in the absence of the normal starting possibility by means of the energy store (64), the two batteries (63a and 63b) are connected in series to the starter-generator (61).

22. Drive according to one of claims 1 to 21, **characterised in that** the switching means (2, 12, 15) and the controller (10), after reaching a predetermined sunken voltage or charge of the energy store (4), during the consumption phase of the drive motor separate this from the energy store (4) and activate the generator function of the starter generator (1) in the onboard vehicle electrical system (5).

23. Drive according to one of claims 14 to 22, **characterised in that** the starter generator (61) is temporarily powered by the batteries connected in series (63a and 63b) as a drive motor.

24. Drive according to one of claims 9 to 23, **characterised in that** the loads (I) are associated with a high quiescent current priority with the high voltage on-board vehicle electrical system (65).

25. Drive according to claim 1, **characterised in that** the stored energy is at least temporarily supplied to a vehicle onboard electrical system during travel.

26. Drive according to claim 25, **characterised in that** when using two onboard vehicle electrical systems with different voltages, the stored energy is supplied to the onboard vehicle electrical system (5) with the higher voltage.

27. Drive according to claim 1, **characterised in that** when using two on-board vehicle electrical systems with a different voltage even during the charging and discharging of the energy store (4) the onboard vehicle electrical system is supplied with the lower voltage from the energy store (4).

28. Drive according to claim 1, **characterised in that** in the drive phase of the starter generator (1) by the energy of the energy store (4) the onboard vehicle electrical system (5) is disconnected from the energy store (4).

29. Drive according to one of claims 1 to 28, **characterised in that** the controller (10) controls the switching elements (S_{R}, S_{G}) such that with the vehicle stationary the energy store (4) is mostly charged from the battery (3).

30. Drive according to one of claims 1 to 29, **characterised in that** the energy store (4), has a second energy store (4a) connected in parallel and that the energy of one of these the energy stores (4 or 4a) is only used for acceleration (boosting).

31. Drive according to claim 1 to 30, **characterised in that** the controller is designed in such a way that the energy store (4) retains a residual charge for a subsequent acceleration phase.

32. Drive according to one of claims 1 to 31, **characterised in that** the starter generator (1) has two output channels (5, 5'), of which one (5) leads to the onboard vehicle electrical system and the other (5') to the energy store (4).

33. Drive according to one of claims 1 to 32, **characterised in that** for emergency starting an external support point (16) is provided with the low voltage.

34. Drive according to one of claims 1 to 32, **characterised in that** for emergency starting an external support point is provided a the higher voltage.

35. Drive according to one of claims 1 to 34, **characterised in that** the energy store (4) is a double layer capacitor, in particular with low internal resistance, especially an ultracap.

36. Drive according to one of claims 1 to 35, **characterised in that** the energy store is dimensioned at a lower voltage (for example 30V) than the voltage of the first onboard vehicle electrical system.

37. Drive according to one of claims 1 to 36, **characterised in that** the energy store (4) is designed with a small storage capacity.

38. Drive according to one of claims 1 to 37, **characterised in that** during charging of the energy store (4) during regeneration loads are disconnected and/or their supply is restricted.

39. Drive according to one of claims 1 to 38, **characterised in that** the controller (10) as the quiescent current management during a prolonged downtime of the vehicle depending on the charge level of the batteries (2, 3) disconnects the residual current loads in an order of priority or reduces quiescent current consumption through a longer duty cycle time.

40. Drive according to one of claims 6 to 39, **characterised in that** each of said onboard vehicle electrical systems (45, 45a) has a battery (42, 43).

41. Drive according to one of claims 1 to 5, **characterised in that** the onboard vehicle electrical system (88) within which the loads (80, 81) are integrated is a low-voltage onboard vehicle electrical system.

42. Drive according to claim 41, **characterised in that** the onboard vehicle electrical system (88) is supplied at least partially and/or temporarily from the energy store (84) via a voltage converter (86).

43. Drive according to claim 42, **characterised in that** the onboard vehicle electrical system (88) including during the loading of the energy storage (84) is supplied at least partially and/or temporarily by the energy store (84).

## Revendications

1. Système d'entraînement d'un véhicule automobile comprenant
- un moteur à combustion interne,
- un générateur-démarreur intégré (1),
- un bloc de commutation (1a), qui est agencé entre le générateur-démarreur et un réseau de bord haute-tension (5),
- au moins un accumulateur d'énergie (4),
- un réseau de bord basse-tension (5a),
- au moins une batterie basse-tension (3),
- un convertisseur de tension continue (6) par l'intermédiaire duquel la batterie basse-tension (3) est reliée au réseau haute-tension (5),
- des éléments de commutation (2, 12, 15), qui englobent un premier élément de commutation (2) agencé entre l'accumulateur d'énergie (4) et le réseau haute-tension (5), et le bloc de commutation (1a),
- et englobent un ensemble de commande (10) pour la commande des éléments de commutation (2, 12, 15), le premier élément de commutation (2) et l'ensemble de commande (10) commutant, en fonction de l'état de fonctionnement du véhicule et/ou de la charge ou de la tension de l'accumulateur d'énergie (4), entre
- charge de l'accumulateur d'énergie (4) par le générateur-démarreur (1),
- fonctionnement du générateur-démarreur (1) en tant que moteur d'entraînement alimenté par l'accumulateur d'énergie (4),
**caractérisé en ce que**
les éléments de commutation (2, 12, 15) et l'ensemble de commande (10) commutent également, en fonction de l'état de fonctionnement du véhicule et/ou de la charge ou de la tension de l'accumulateur d'énergie (4), entre
- l'alimentation du réseau haute-tension (5) par le générateur-démarreur (1) fonctionnant en tant que générateur, ou
- l'alimentation du réseau haute-tension par la batterie basse-tension (3).

2. Système d'entraînement selon la revendication 1, **caractérisé en ce que** les moyens de commutation supplémentaires (12, 15) englobent un deuxième moyen de commutation (15), et le deuxième moyen de commutation (15) est monté entre les appareils consommateurs et le point de connexion (15') au niveau duquel se rencontrent les conducteurs électriques, qui relient le moyen de commutation (2) au bloc de commutation, notamment à l'onduleur à modulation de largeur d'impulsions (1a).

3. Système d'entraînement selon la revendication 1 ou la revendication 2, **caractérisé en ce que** le générateur-démarreur (1) est utilisé en tant que moteur d'entraînement produisant une assistance à la marche pour le moteur à combustion interne pendant le fonctionnement en marche du véhicule.

4. Système d'entraînement selon l'une des revendications 1 à 3, **caractérisé en ce que** le générateur-démarreur (1) est utilisé en tant que moteur d'entraînement supplémentaire lors d'un démarrage rapide.

5. Système d'entraînement selon l'une des revendications 1 à 4, **caractérisé en ce que** le générateur-démarreur (1) est utilisé en tant que seul moteur d' entraînement dans le mode de fonctionnement "Stop-and-go", par alimentation par l'accumulateur d'énergie ou la batterie.

6. Système d'entraînement selon l'une des revendications 1 à 5, **caractérisé en ce que** l'accumulateur d'énergie (4) peut être chargé au moyen de la batterie basse-tension (3), par l'intermédiaire du convertisseur de tension continue (6).

7. Système d'entraînement selon la revendication 6, **caractérisé en ce que** la sortie du convertisseur de tension continue (6) peut être commutée à l'accumulateur d'énergie (4) pour assurer sa charge.

8. Système d'entraînement selon la revendication 6 ou la revendication 7, **caractérisé en ce que** la batterie basse-tension (3) peut être chargée à partir du réseau haute-tension (5) par l'intermédiaire du convertisseur de tension continue (6).

9. Système d'entraînement selon l'une des revendications 6 à 8, **caractérisé en ce que** des appareils consommateurs (8 ; 7a, 7b) sont affectés en partie au réseau basse-tension (5a) et en partie au réseau haute-tension (5).

10. Système d'entraînement selon la revendication 9, **caractérisé en ce que** les appareils consommateurs (7a, 7b) du réseau haute-tension sont alimentés au moins partiellement et/ou le cas échéant temporairement, par l'accumulateur d'énergie (4).

11. Système d'entraînement selon l'une des revendications 8 à 10, **caractérisé en ce que** les appareils consommateurs (8) du réseau basse-tension sont au moins partiellement alimentés, et le cas échéant la batterie (3) respectivement chargée par le réseau haute-tension (5), par l'intermédiaire du convertisseur de tension continue (6).

12. Système d'entraînement selon l'une des revendications 8 à 10, **caractérisé en ce que** les appareils consommateurs (8) du réseau basse-tension sont temporairement au moins partiellement alimentés, et le cas échéant la batterie (3) respectivement chargée par l'accumulateur d'énergie (4), par l'intermédiaire du convertisseur de tension continue (6).

13. Système d'entraînement selon l'une des revendications 9 à 12, **caractérisé en ce que** l'on arrête au moins en partie des appareils consommateurs (IIa, IIb) du réseau basse-tension, dans le cas d'un faible état de charge de la batterie (63).

14. Système d'entraînement selon l'une des revendications 1 à 13, **caractérisé en ce que** la batterie est constituée de deux batteries (63a, 63b).

15. Système d'entraînement selon la revendication 14, **caractérisé en ce qu'**à chaque batterie (63a, 63b) est associé un convertisseur de tension continue (66a respectivement 66b).

16. Système d'entraînement selon la revendication 15, **caractérisé en ce que** dans le cas d'une défaillance d'un convertisseur de tension continue (66a ou 66b), on relie les batteries (63a et 63b) à l'autre (66b ou 66a), en les mettant en parallèle.

17. Système d'entraînement selon la revendication 15 ou la revendication 16, **caractérisé en ce que** dans le cas d'une défaillance d'une batterie (63a respectivement 63b), on relie la batterie intacte (63b ou 63a) aux deux convertisseurs de tension continue (66a et 66b).

18. Système d'entraînement selon l'une des revendications 11 à 17, **caractérisé en ce que** les appareils consommateurs du réseau basse-tension sont subdivisés en deux groupes (IIa/IIb), dont un groupe (IIa) peut être mis à l'arrêt.

19. Système d'entraînement selon la revendication 16 ou la revendication 17 et la revendication 18, **caractérisé en ce que** l'on commute les deux groupes d'appareils consommateurs (IIa et IIb) en parallèle.

20. Système d'entraînement selon l'une des revendications 1 à 19, **caractérisé en ce que** pour démarrer le moteur à combustion interne, on relie le générateur-démarreur (1) à l'accumulateur d'énergie (4).

21. Système d'entraînement selon l'une des revendications 14 à 19, **caractérisé en ce que** dans le cas d'une défaillance de la possibilité de démarrage normale au moyen de l'accumulateur d'énergie (64), on relie les deux batteries (63 et 63b) mises en série, au générateur-démarreur (61).

22. Système d'entraînement selon l'une des revendications 1 à 21, **caractérisé en ce que** les moyens de commutation (2, 12, 15) et l'ensemble de commande (10), après que l'on ait atteint une tension ou une charge diminuée, prédéfinie, de l'accumulateur d'énergie (4) pendant la phase d'utilisation du moteur d'entraînement, isolent celui-ci de l'accumulateur d'énergie (4), et rendent active la fonction de générateur du générateur-démarreur (1) dans le réseau de bord (5).

23. Système d'entraînement selon l'une des revendications 14 à 22, **caractérisé en ce que** le générateur-démarreur (61) est entraîné temporairement par les batteries (63a et 63b) mises en série, en tant que moteur d'entraînement.

24. Système d'entraînement selon l'une des revendications 9 à 23, **caractérisé en ce que** les appareils consommateurs (I) à priorité élevée de courant de repos ou courant de veille, sont associés au réseau de bord haute-tension (65).

25. Système d'entraînement selon la revendication 1, **caractérisé en ce que** pendant le fonctionnement en marche, l'énergie emmagasinée accumulée est transmise au moins temporairement à un réseau de bord.

26. Système d'entraînement selon la revendication 25, **caractérisé en ce que** dans le cas de l'utilisation de deux réseaux de bord avec une tension différente, l'énergie emmagasinée accumulée est transmise au réseau de bord (5) de tension la plus élevée.

27. Système d'entraînement selon la revendication 1, **caractérisé en ce que** dans le cas de l'utilisation de deux réseaux de bord avec une tension différente, le réseau de bord de tension la plus faible est déjà alimenté par l'accumulateur d'énergie (4) pendant la charge et la décharge de l'accumulateur d'énergie (4).

28. Système d'entraînement selon la revendication 1, **caractérisé en ce que** dans la phase d'entraînement du générateur-démarreur (1) par l'énergie de l'accumulateur d'énergie (4), le réseau de bord (5) est déconnecté de l'accumulateur d'énergie (4).

29. Système d'entraînement selon l'une des revendications 1 à 28, **caractérisé en ce que** l'ensemble de commande (10) commande les éléments de commutation (S_{R}, S_{G}) de manière à ce qu'à l'arrêt du véhicule, l'accumulateur'd'ênergie (4) est dans une large mesure chargé par la batterie (3).

30. Système d'entraînement selon l'une des revendications 1 à 29, **caractérisé en ce qu'**avec l'accumulateur d'énergie (4) est monté en parallèle un deuxième accumulateur d'énergie (4a), et **en ce que** l'énergie de l'un de ces accumulateurs d'énergie (4 ou 4a) n'est utilisée que pour accélérer (booster).

31. Système d'entraînement selon les revendications 1 à 30, **caractérisé en ce que** l'ensemble de commande est conçu pour que l'accumulateur d'énergie (4) conserve une charge résiduelle pour une phase d'accélération ultérieure.

32. Système d'entraînement selon l'une des revendications 1 à 31, **caractérisé en ce que** le générateur-démarreur (1) présente deux canaux de sortie (5, 5') dont l'un (5) mène au réseau de bord et l' autre (5') à l'accumulateur d'énergie (4).

33. Système d'entraînement selon l'une des revendications 1 à 32, **caractérisé en ce que** pour le démarrage d'urgence, il est prévu un point d'aide de référence (16), externe, présentant la tension basse.

34. Système d'entraînement selon l'une des revendications 1 à 32, **caractérisé en ce que** pour le démarrage d'urgence, il est prévu un point d'aide de référence, externe, présentant la tension plus élevée.

35. Système d'entraînement selon l'une des revendications 1 à 34, **caractérisé en ce que** l'accumulateur d'énergie (4) est un condensateur double couche, de préférence avec une faible résistance interne, notamment un super-condensateur appelé "Ultra Cap".

36. Système d'entraînement selon l'une des revendications 1 à 35, **caractérisé en ce que** l'accumulateur d'énergie est dimensionné pour une tension plus faible (par exemple 30V) que la tension du premier réseau de bord.

37. Système d'entraînement selon l'une des revendications 1 à 36, **caractérisé en ce que** l'accumulateur d'énergie (4) est conçu pour une faible capacité d'accumulation.

38. Système d'entraînement selon l'une des revendications 1 à 37, **caractérisé en ce que** pendant la charge de l'accumulateur d'énergie (4) au cours de la récupération, des appareils consommateurs sont arrêtés et/ou alimentés de manière réduite.

39. Système d'entraînement selon l'une des revendications 1 à 38, **caractérisé en ce que** l'ensemble de commande (10) assure, en tant que gestion du courant de repos ou de veille au cours d'un temps d'arrêt plus long du véhicule, en fonction de l'état de charge des batteries (2, 3), l'arrêt ou la déconnection des appareils consommateurs de courant de repos ou de veille selon un ordre de priorité, ou la réduction de la consommation de courant de repos ou de veille par un temps de cycle d'éveil plus long.

40. Système d'entraînement selon l'une des revendications 6 à 39, **caractérisé en ce que** chacun des réseaux de bord (45, 45a) comporte une batterie (42, 43).

41. Système d'entraînement selon l'une des revendications 1 à 5, **caractérisé en ce que** le réseau de bord (88) dans lequel sont intégrés les appareils consommateurs (80, 81), est un réseau de bord basse-tension.

42. Système d'entraînement selon la revendication 41, **caractérisé en ce que** le réseau de bord (88) est alimenté au moins partiellement et/ou temporairement par l'accumulateur d'énergie (84), par l'intermédiaire d'un convertisseur de tension (86).

43. Système d'entraînement selon la revendication 42, **caractérisé en ce que** le réseau de bord (88) est alimenté au moins partiellement et/ou temporairement par l'accumulateur d'énergie (84) également pendant la charge de l'accumulateur d'énergie (84).
